# EUROPÄISCHE PATENTSCHRIFT

(11) **EP 4 308 368 B1**
(45) Veröffentlichungstag und Bekanntmachung des Hinweises auf die Patenterteilung: **07.05.2025**
(21) Anmeldenummer: 22712927.7
(22) Anmeldetag: 11.03.2022
(51) Int. Cl.: B29C 64/118, B29C 64/209, B29C 64/295, B29C 64/329, B33Y 10/00, B33Y 30/00, B22F 12/53

(54) **DRUCKKOPF FÜR EINEN 3D-DRUCKER UND VERFAHREN ZUM BEFÜLLEN EINES DRUCKKOPFES**
PRINTHEAD FOR A 3D PRINTER AND METHOD FOR FILLING A PRINTHEAD
TÊTE D'IMPRESSION POUR IMPRIMANTE 3D ET PROCÉDÉ DE REMPLISSAGE D'UNE TÊTE D'IMPRESSION

(30) Priorität: 18.03.2021 DE 102021202625
(43) Veröffentlichungstag der Anmeldung: 24.01.2024
(73) Patentinhaber: Robert Bosch GmbH, 70442 Stuttgart (DE)
(72) Erfinder: SCHNEIDER, Thilo, 75242 Neuhausen (DE); JAHNLE, Hendrik, 71397 Leutenbach (DE)
(86) Internationale Anmeldenummer: PCT/EP2022/056307
(87) Internationale Veröffentlichungsnummer: WO 2022/194693

(56) Entgegenhaltungen:
- DE-A1- 102016 222 306

## Beschreibung

Die vorliegende Erfindung betrifft einen Druckkopf für einen 3D-Drucker und einem Verfahren zum Befüllen eines Druckkopfes.

### Stand der Technik

Ein 3D-Drucker für ein in seiner Viskosität veränderliches Material erhält eine feste Phase dieses Materials als Ausgangsmaterial, erzeugt daraus eine flüssige Phase und bringt diese flüssige Phase selektiv an den Stellen, die zu dem zu erzeugenden Objekt gehören, auf. Ein solcher 3D-Drucker umfasst einen Druckkopf, in dem das Ausgangsmaterial druckfertig aufbereitet wird. Weiterhin sind Mittel zur Erzeugung einer Relativbewegung zwischen dem Druckkopf und der Arbeitsfläche, auf der das Objekt entstehen soll, vorgesehen. Dabei können entweder nur der Druckkopf, nur die Arbeitsfläche oder aber sowohl der Druckkopf als auch die Arbeitsfläche bewegt werden.

Der Druckkopf hat einen ersten Betriebszustand, in dem flüssiges Material aus ihm austritt, und einen zweiten Betriebszustand, in dem kein flüssiges Material aus ihm austritt. Der zweite Betriebszustand wird beispielsweise dann eingenommen, wenn eine andere Position auf der Arbeitsfläche angefahren werden und auf dem Weg dorthin kein Material ausgebracht werden soll. Zwischen den beiden Betriebszuständen des Druckkopfes kann beispielsweise umgeschaltet werden, indem der Vortrieb des festen Ausgangsmaterials ein- bzw. ausgeschaltet wird.

Am verbreitetsten ist das "fused deposition modeling" (FDM), bei dem ein Filament aus dem Ausgangsmaterial in einer elektrisch beheizten Extruderdüse aufgeschmolzen und schichtweise auf eine Plattform aufgebracht wird. In Form eines derartigen Filaments ist das Ausgangsmaterial sehr teuer.

In der US 2016/082 627 A1 wird vorgeschlagen, das Ausgangsmaterial in Granulatform zuzuführen und mit einer Förderschnecke zu einer beheizten Zone zu fördern, aus der es in plastifizierter Form austritt. Zum einen ist Granulat deutlich günstiger, und zum anderen können Mischungen aus verschiedenen thermoplastischen Materialien auf diese Weise einfach hergestellt werden.

Ferner ist aus der DE 102016222306 A1 ein Druckkopf bekannt, wobei in diesem ein Granulat über einen Kolben und eine beheizte Strecke plastifiziert wird. Wenn der Kolben auf das Granulat drückt, wird dieses verdichtet und zu einer Plastifizierungszone im unteren Bereich des Druckkopfes gefördert. Die Zuführung des Granulats geschieht über einen trichterförmigen Einlass, wobei die Granulatstücke innerhalb des Trichters nur aufgrund der Schwerkraft nachrutschen und dabei verklemmen können.

Der Erfindung liegt die Aufgabe zugrunde, einen kompakten Druckkopf für einen 3D-Drucker bereitzustellen, der ein störungsfreies Befüllen und dadurch einen stabilen Druckprozess ermöglicht, sowie ein Verfahren zum Befüllen des Druckkopfes.

### Offenbarung der Erfindung

Im Rahmen der Erfindung wurde ein Druckkopf für einen 3D-Drucker entwickelt. Ferner wurde ein Verfahren zum Befüllen eines Druckkopfes entwickelt.

Der Druckkopf für einen 3D-Drucker umfasst eine in einem Gehäuse des Druckkopfes angeordnete Aktorvorrichtung zur Ansteuerung eines Kolbens, eine Zuführeinrichtung für ein druckbares Material, ein am Gehäuse und der Zuführeinrichtung angeordneten Flansch mit einer Kühlvorrichtung, ein Düsenkopf mit Heizelementen zur Umwandlung des Materials von einer festen Phase in eine flüssige Phase und eine Düse zur Ausbringung der flüssigen Phase des Materials aus dem Düsenkopf.

Erfindungsgemäß umfasst die feste Phase des Materials Granulatstücke und die Zuführeinrichtung weist eine Einblasvorrichtung zum Lösen der Granulatstücke voneinander auf.

Die Einblasvorrichtung der Zuführeinrichtung verhindert dadurch ein Verklemmen der Granulatstücke, wodurch ein Verstopfen der Zuführvorrichtung verhindert wird und sorgt dadurch in vorteilhafter Weise für ein sicheres Auffüllen des Druckkopfes mit Granulat. Ferner können kleinere Durchmesser im Einlass der Zuführeinrichtung verwendet werden, wodurch in vorteilhafter Weise ein kompakter Druckkopf dargestellt werden kann.

Die Aktorvorrichtung zur Ansteuerung des Kolbens kann ein Elektromotor, beispielsweise mit einer mechanischen Übersetzung oder ein hydraulischer Antrieb mit einer hydraulischen Druckquelle sein.

Ein Elektromotor als Aktorvorrichtung hat gegenüber einem hydraulischen Antrieb ein geringeres Gewicht und sorgt dadurch in vorteilhafter Weise für eine hohe Dynamik des gesamten Druckers und des Druckprozesses, da weniger Masse beschleunigt werden muss.

Ein hydraulischer Antrieb erreicht in vorteilhafter Weise hohe Kräfte beim Ansteuern des Kolbens.

Die Zuführeinrichtung für das druckbare Material kann insbesondere als eine Zuführung für ein als Granulat vorliegendes Material, bzw. Ausgangsmaterial vorgesehen sein. Das Ausgangsmaterial kann insbesondere ein thermoplastisches Material sein.

Es wurde erkannt, dass durch den Einsatz von Granulat als Ausgangsmaterial gegenüber Druckköpfen, die Filamente aus thermoplastischem Material verwenden, spezifische Vorteile erzielt werden, insbesondere bei den Kosten für die Ausgangsmaterialien der Drucker.

Im Vergleich zu einem Druckkopf, der Granulat mit einer Förderschnecke transportiert, lässt sich der Druckkopf gemäß der Erfindung kompakter bauen. Dies wiederum hat zur Folge, dass der Druckkopf leichter und einfacher bewegbar ist. Dies ist insbesondere dann von Vorteil, wenn der Druckkopf sehr schnell, insbesondere mit Geschwindigkeiten von 100 mm/s oder mehr, bewegt werden soll.

Der Flansch umfasst eine Kühlvorrichtung, wodurch im Bereich der Zuführvorrichtung ein optimiertes Thermomanagement erzielt wird, so dass in vorteilhafter Weise ein Verkleben des Materials, bzw. des Granulats am Kolben vermieden wird. Ferner weist der Düsenkopf Heizelemente zur Umwandlung des Materials von einer festen Phase, insbesondere Granulat, in eine flüssige Phase auf. Die Heizelemente im Düsenkopf sorgen in vorteilhafter Weise für eine gezielte Einbringung der Heizleistung in das aufzuschmelzende Material. Die flüssige Phase, bzw. Schmelze ist anschließend durch eine Kolbenbewegung durch die Düse des Düsenkopfes ausbringbar.

Der Druckkopf umfasst eine separate Kolbenbuchse zur Führung des Kolbens, die es ermöglicht, dass der Kolben direkt in der Kolbenbuchse geführt ist und nicht mehr im Gehäuse oder einem Zylinder des Druckkopfs. Dadurch wird in vorteilhafter Weise erreicht, dass möglicher Verschleiß nicht mehr direkt an der Innenwand des Gehäuses oder des Zylinders auftritt, sondern innerhalb der Kolbenbuchse. Die Kolbenbuchse als separates Bauteil bietet den Vorteil, dass sie bei Bedarf auswechselbar ist. Zudem ist die Möglichkeit gegeben, dass zueinander abgestimmte Kolben und Kolbenbuchsen bei unterschiedlichen Durchmessern ohne weitere konstruktive Veränderungen, beispielsweise am Flansch und dem Düsenkopf, eingesetzt werden können.

In einer Weiterbildung umfasst die Einblasvorrichtung ein pneumatisches Ventil und einen Luftkanal.

Der Luftkanal ist in einer Weiterbildung in einem Gehäuseteil der Zuführeinrichtung angeordnet und mündet in einem unteren Bereich der Zuführeinrichtung oberhalb eines Öffnungsquerschnitts des Flansches.

In einer bevorzugten Weiterbildung der Erfindung ist der Luftkanal durch das pneumatische Ventil mit Luftimpulsen beaufschlagbar, wobei die Luftimpulse derart im unteren Bereich auf die Granulatstücke wirken, dass sich diese voneinander lösen.

Ferner betrifft die Erfindung ein Verfahren zum Befüllen des erfindungsgemäßen Druckkopfes, wobei ein beheizbarer Hohlraum des Druckkopfes mit druckbarem Material durch die Zuführeinrichtung befüllt wird.

Das Befüllen des Hohlraums mit druckbarem Material durch die Zuführeinrichtung umfasst zumindest folgende Schritte:
- das Einfüllen der Granulatstücke über eine Öffnung der Zuführeinrichtung in den Druckkopf und
- das Erzeugen von Luftimpulsen zum Lösen der Granulatstücke voneinander.

In einer Weiterbildung wird das Einfüllen der Granulatstücke manuell oder automatisiert durchgeführt, wobei die Granulatstücke durch den Einfluss der Schwerkraft in den unteren Bereich der Zuführeinrichtung rutschen.

In einer bevorzugten Weiterbildung des Verfahrens, wird das Erzeugen von Luftimpulsen in Intervallen durchgeführt und die Granulatstücke werden derart im Bereich der Luftimpulse aufgeschleudert, dass diese beim wieder Herabfallen einen Impuls auf die darunterliegenden Granulatstücke ausüben und diese zum Nachrutschen in den beheizten Hohlraum des Druckkopfes anregen.

Der Prozess des effektiven Nachfüllens erfordert das Hinterblasen des Granulats, wodurch ein Effekt des Anhebens des Granulats entsteht, so dass dieses anschließend in den Druckkopf rutscht. Das Aufschleudern, bzw. Aufwirbeln ist für einen automatisierten Einsatz notwendig und durch den entstehenden Schwerkraftimpuls, bzw. Schlag rutscht das Granulat in vorteilhafter Weise nach. Bei Bedarf kann durch die Luftimpulse auch verklemmtes Granulat gelöst werden, wodurch in vorteilhafter Weise Stillstandzeiten des Druckkopfes vermieden werden.

In einem oberen Teilbereich der Kolbenbuchse ist eine Öffnung, bzw. der Öffnungsquerschnitt angeordnet, der die Zufuhr von Material aus der Zuführvorrichtung in die Kolbenbuchse ermöglicht. Am unteren Bereich der Öffnung ist ein Anschnitt angeordnet, der in einem stumpfen Winkel zur Innenfläche der Kolbenbuchse ausgebildet ist. Der Bereich des Anschnitts ist gehärtet, oder alternativ als separates gehärtetes Einlegestück ausgeführt. Beim Verschließen der Öffnung durch den Kolben, wird Material, bzw. Granulat vom Kolben am Anschnitt abgeschert, wodurch eine starke mechanische Belastung auf diesen Teil der Kolbenbuchse wirkt. Durch die separate Kolbenbuchse und dem gehärteten Bereich des Anschnitts wird in vorteilhafter Weise eine längere Standzeit und ein schnelleres Austauschen eines defekten Bauteils erreicht.

Der Kolben umfasst einen ersten Kolbenteil zur Anbindung an der Aktorvorrichtung, einen Kolbenkopf zur Anbindung am ersten Kolbenteil und zur Aufnahme der Kolbennadel. Der erste Kolbenteil ist bevorzugt als Aluminiumhohlkolben ausgebildet, wodurch Kühlmittel durch das erste Kolbenteil geleitet werden kann und dadurch in vorteilhafter Weise eine Kolbenkühlung erreicht wird. Der Kolbenkopf weist an der zur Düse gewandten Seite eine Unterseite auf, wobei die Kolbennadel aus der Mitte der Unterseite herausragt. Die Fläche der Unterseite des Kolbenkopfes abzüglich der virtuellen Fläche der Kolbennadel bildet eine Kolbenfläche zur Erzeugung eines Drucks auf das Material bildet. Die Unterseite des Kolbenkopfes wird durch die Kolbenkühlung mitgekühlt und verringert dadurch lokal die Viskosität der Schmelze, bzw. des plastischen Materials am Kolbenboden. Dadurch wird verhindert, dass flüssige Schmelze in Richtung der Antriebsvorrichtung einfließen kann, wodurch in vorteilhafter Weise ein Verklemmen des Kolbens in der Kolbenbuchse als auch ein Eindringen der Schmelze in die Antriebsvorrichtung verhindert wird. Zudem löst sich das Material beim Zurückziehen einfacher vom Kolbenboden, bzw. der Unterseite des Kolbenkopfes, so dass beim Erreichen eines Start-, bzw. Ausgangspunktes des Kolbens ein einfaches Nachfüllen von Material in einer festen Phase, bzw. von Granulat möglich ist, ohne das Restmaterial am Kolbenboden haftet.

An der Unterseite des Kolbenkopfes, bzw. am Kolbenboden ist bevorzugt ein Temperatursensor angebracht. Aufgrund dieser Anordnung des Temperatursensors ist ein kolbenpositionsabhängiges Thermomanagement des Druckkopfes möglich, wodurch ein schnelleres Aufheizen des Materials erreicht wird, ohne das Schmelze mit der Unterseite des Kolbenkopfes in Kontakt kommt. Dadurch kann in vorteilhafter Weise eine Beschleunigung eines Befüllvorganges des Druckkopfes erreicht werden.

Der Kolbenkopf ist als zylindrisches Bauteil ausgeführt und bevorzugt aus einem thermisch resistenten Material hergestellt. Die Kombination, dass die Ausführung des ersten Kolbenteils aus Aluminium und des Kolbenkopfes aus beispielsweise Stahl ausgeführt ist, erweist sich als vorteilhaft, da so der Kolben einen elastischen oberen Bereich zur Aufnahme der mechanischen Spannungen und einen thermisch resistenten unteren Bereich im Bereich des erhitzten Materials aufweist.

Die Kolbennadel ragt je nach Kolbenposition in die Bohrung eines Nierenstücks nur teilweise hinein oder ganz hindurch, wodurch die Kolbennadel in der zentrischen Bohrung des Nierenstücks in vorteilhafter Weise geführt wird.

Das Nierenstück weist konzentrisch angeordnete Öffnungen auf, wobei diese eine fluidische Verbindung zwischen einen in der Kolbenbuchse angeordnetem Hohlraum und einen in einem unteren Teil des Düsenkopfs angeordnetem Schmelzeraum bilden.

Der Hohlraum ist innerhalb der Kolbenbuchse angeordnet und wird durch ein Volumen gebildet, dessen äußere Fläche aus der Innenseite der Kolbenbuchse, der Außenseite der Kolbennadel, der Oberseite des Nierenstücks und der Unterseite des Kolbens gebildet ist.

Innerhalb des Hohlraums wird das Material, bzw. das Granulat durch das Verfahren des Kolbens über die Unterseite des Kolbenkopfs, bzw. die Kolbenfläche verdichtet. Während der Verdichtung des Materials ist das Thermomanagement des Druckkopfs derart eingestellt, dass sich innerhalb des Hohlraums keine flüssige Phase des Materials, bzw. keine Schmelze bildet, sondern das Material als plastische Phase ausgebildet wird. Dadurch wird in vorteilhafter Weise erreicht, dass kein plastifiziertes Material an der Unterseite des Kolbens anhaftet. Jedoch wird während der Verdichtung ein Teil der flüssigen Phase, bzw. Schmelze im Schmelzeraum durch die in den Schmelzeraum eindringende Kolbennadel durch die konzentrisch angeordneten Öffnungen des Nierenstücks aus dem Schmelzeraum heraus in den Hohlraum der Kolbenbuchse gedrückt. Dabei vermischen sich Teile der Schmelze mit Teilen der plastischen Phase. Dabei gibt die Schmelze Energie in die plastische Phase ab wodurch in vorteilhafter Weise ein homogeneres Material erzeugt wird. Das Nierenstück bildet somit einen Mischer, bzw. einen statischen Mischer, da außer der Kolbenbewegung in vorteilhafter Weise keine weiteren beweglichen Teile zur Vermischung der plastischen mit der flüssigen Phase nötig ist. Der Ausgestaltung des Nierenstücks sorgt somit in vorteilhafter Weise für eine Blendenwirkung, die zu einer besseren Durchmischung des Materials, bzw. der Schmelze mit dem plastifiziertem Material führt.

Das Nierenstück leitet die Heizenergie des Heizelements aus dem Düsenkopf sowohl in die Schmelze als auch in die Kolbennadel, was in vorteilhafter Weise für ein verbessertes Energiemanagement beim Aufheizen der Schmelze sorgt.

Das Nierenstück kann in einer ersten Ausführung als ein separates Bauteil ausgeführt oder in einer zweiten Ausführung einstückig mit der Kolbenbuchse ausgebildet sein.

Der Druckkopf weist ausgehend vom oberen Teilbereich der Kolbenbuchse über das Nierenstück bis zur Düse unterschiedliche Zustandszonen auf, wobei die Zustandszonen einen Aggregatzustand des Materials in Abhängigkeit seiner Temperatur Ts darstellen. Dabei ist der Aggregatzustand des Materials über die Zustandszonen hinweg von einer festen Phase über eine plastische Phase in eine flüssige Phase veränderbar.

Die Zustandszonen des Druckkopfs umfassen eine Kalte Zone mit Material in fester Phase, eine Plastifizierungszone mit Material in plastischer Phase, eine Schmelzezone und eine Prozesszone mit jeweils Material in flüssiger Phase und eine Mischzone mit Material in plastischer und flüssiger Phase.

Die Kühlvorrichtung im Flansch und die im Kolben integrierte Kolbenkühlung sind dafür vorgesehen, die Temperatur Ts der plastischen Phase des Materials in der Plastifizierungszone auch dann unterhalb einer Glasübergangstemperatur T_{g} zu halten, ab der das Material plastifizieren und in eine flüssige Phase übergehen würde.

Dies ist gleichbedeutend damit, dass der Kolbenboden ausschließlich mit der festen Phase des Materials in Berührung kommt und nicht mit einer vollständig plastifizierten Phase. Die vollständig plastifizierte Phase hat eine zähe, klebrige Konsistenz mit einer hohen Neigung zur Oberflächenadhäsion. Wenn der Kolben mit dieser Phase in Berührung kommt, kann er damit verkleben, wodurch beispielsweise das Nachrieseln von frischem Granulat beim Zurückziehen des Kolbens behindert wird. Dieser Effekt wird in vorteilhafter Weise vermieden.

Im Schmelzeraum ist ein Drucksensor für den Druck p_{L}, und/oder ein Temperatursensor für die Temperatur T_{L} der flüssigen Phase angeordnet.

Die Messung des Drucks p_{L} ist der primäre Parameter, der über die Ausbringung, bzw. den Austrag oder auch Massenstrom an Schmelze aus der Austrittsöffnung entscheidet. Eine zusätzliche Messung der Temperatur T_{L} ermöglicht es, bei der Bestimmung des Massenstroms Q auch die Temperaturabhängigkeit der Viskosität des Materials zu berücksichtigen. Durch den Kolbenvorschub kann die zu dosierende Menge exakt geregelt werden. Für die Qualität des hergestellten Bauteils, bzw. Objekts ist die Kontrolle der Temperatur T_{L}, insbesondere in Form einer konstanten und genauen Regelung, sogar wichtiger, um eine thermische Degradation des Materials zu vermeiden.

Ferner ist an der Aktorvorrichtung und/oder am Kolben ein Wegmesssystem für die Position s des Kolbens, und/oder ein Sensor für die vom Kolben auf das Material ausgeübte Kraft F oder für einen auf den Kolben ausgeübten Hydraulikdruck p_{H}, vorgesehen.

Der Vorschub des Kolbens ist ein Maß für die Menge an auszutragendem Material. Diese Menge kann unter anderem über das Wegmesssystem kontrolliert werden. Weiterhin korreliert die Kraft F unmittelbar mit dem Druck in dem Material.

Zudem ist am Kolben, insbesondere an der Unterseite des Kolbenkopfes des Kolbens ein Temperatursensor für die Temperatur T_{K} der plastischen Phase des Materials angeordnet.

Aufgrund dieser Anordnung des Temperatursensors ist ein kolbenpositionsabhängiges Thermomanagement des Druckkopfes möglich, wodurch ein schnelleres Aufheizen des Materials erreicht wird, ohne das Schmelze mit der Unterseite des Kolbenkopfes in Kontakt kommt. Dadurch kann in vorteilhafter Weise eine Beschleunigung eines Befüllvorganges des Druckkopfes, bzw. eine Reduzierung der benötigten Zeit des Befüllvorganges erreicht werden.

Ferner ist eine Steuer- und Regeleinheit für eine aktive Regelung der Aktorvorrichtung zum Verfahren des Kolbens entsprechend einer auszuführenden Betriebsstrategie zum Befüllen und Drucken und für eine aktive Regelung der Temperaturen der Heizelemente des Düsenkopfes vorgesehen.

Ferner ist eine Auswerteeinheit vorgesehen, die dazu ausgebildet ist, die Messwerte der Sensoren auszuwerten und die Ergebnisse an die Steuer- und Regeleinheit zur aktiven Regelung der Aktorvorrichtung und zur aktiven Regelung der Heizelemente weiterzugeben.

Durch die Erfassung und Auswertung der Sensorenwerte in Abhängigkeit der jeweiligen Betriebszustände kann die Funktionsfähigkeit des Druckkopfes überprüft werden, wodurch in vorteilhafter Weise frühzeitig Fehler oder Abweichungen im Prozess dargestellt werden können. Ferner können durch die Erfassung der Sensorenwerte definierte Zielwerte angesteuert werden. Es ist auch möglich, dass Korrekturfaktoren berechnet und an die Steuer- und Regeleinheit übertragen werden. Diese können beispielsweise zu den Sollwerten addiert werden, um in vorteilhafter Weise eine gewünschte und konstante Ausbringung der Schmelze aus der Düse zu erreichen.

Die aktive Regelung der Heizelemente ermöglicht eine dynamische Regelung der Temperatur, die in vorteilhafter Weise sowohl das Heizen als auch das Kühlen beeinflusst. Wenn beispielsweise die Heizenergie des ersten Heizelements durch die Steuer- und Regeleinheit reduziert wird, läuft die Kühlung im Flansch weiterhin ab und diese entzieht der plastischen Phase des Materials die Energie, wodurch diese schlagartig abkühlt.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Kurze Beschreibung der Zeichnung

Es zeigen:
- Fig. 1: einen Druckkopf gemäß der Erfindung;
- Fig. 2: eine weitere Darstellung des erfindungsgemäßen Druckkopfes;
- Fig. 3: einen Ausschnitt des erfindungsgemäßen Druckkopfes;
- Fig. 4: ein Ablaufdiagramm eines Verfahrens zum Betreiben des erfindungsgemäßen Druckkopfes;
- Fig. 5: einen Ausschnitt des erfindungsgemäßen Druckkopfes mit einem Druckverlauf;
- Fig. 6: verschiedene Positionen eines Kolbens des erfindungsgemäßen Druckkopfes und
- Fig. 7: ein Ablaufdiagramm eines erfindungsgemäßen Verfahrens zum Befüllen des erfindungsgemäßen Druckkopfes.

### Ausführungsbeispiele

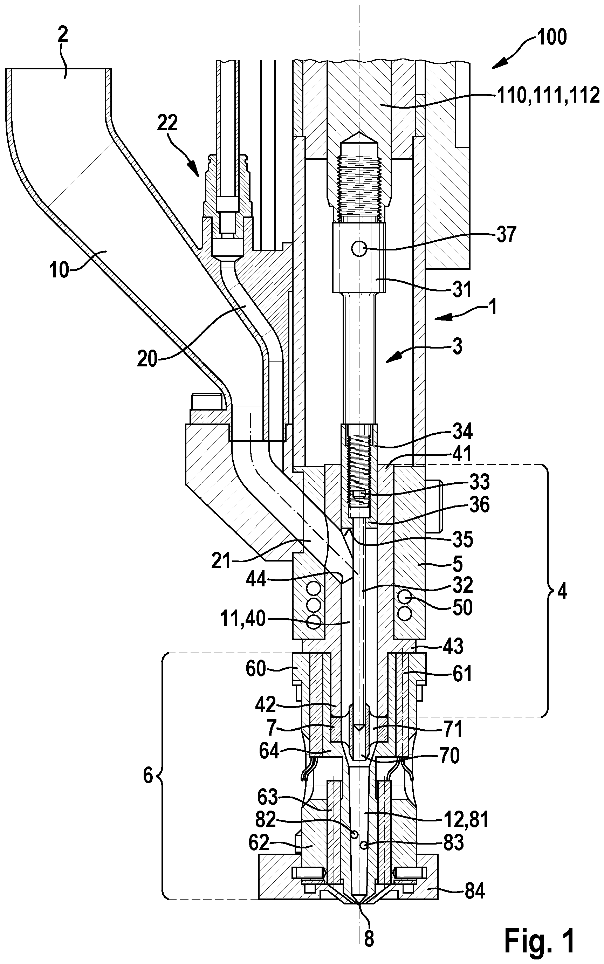

Fig. 1 zeigt einen Druckkopf 100 für einen 3D-Drucker, umfassend eine in einem Gehäuse 1 des Druckkopfes 100 angeordnete Aktorvorrichtung 110 zur Ansteuerung eines Kolbens 3, eine Zuführeinrichtung 2 für ein druckbares Material 10, ein am Gehäuse 1 und der Zuführeinrichtung 2 angeordneten Flansch 5 mit einer Kühlvorrichtung 50, ein Düsenkopf 6 mit Heizelementen 61, 63 zur Umwandlung des Materials 10 von einer festen Phase 10 über eine plastische Phase 11 in eine flüssige Phase 12 und eine Düse 8 zur Ausbringung der flüssigen Phase 12 des Materials 10 aus dem Düsenkopf 6. Der Druckkopf 100 umfasst eine separate Kolbenbuchse 4 zur Führung des Kolbens 3.

Der durch die Kühlvorrichtung 50 innengekühlte Flansch 5 sorgt für eine thermische Trennung des unteren beheizten Bereichs des Druckkopfes 100 zur Aktorvorrichtung 110, bzw. zum Antrieb des Kolbens 3.

Der Kolben 3 umfasst ein erstes Kolbenteil 31 zur Anbindung des Kolbens 3 an der Aktorvorrichtung 110, einen Kolbenkopf 34, der an dem ersten Kolbenteil 31 befestigt ist und in Richtung der Düse 8 eine Kolbennadel 32 aufnimmt. Am Kolben 3, bzw. an einer Unterseite 35 des Kolbenkopfes 34 ist ein Temperatursensor 36 zur Messung der Temperatur T_{K} der plastischen Phase 11 des Materials angeordnet. Die Unterseite 35 des Kolbenkopfes 34 bildet einen Kolbenboden 35. Der erste Kolbenteil 31 ist bevorzugt als Aluhohlkolben ausgebildet, wobei dieser im Inneren einen Hohlraum aufweist, der als Kühlkanal ausgebildet ist. Am unteren Ende des ersten Kolbenteils 31 ist eine Kolbenkühlung 33 angeordnet, die über ein Kühlmittelsystem gekühlt wird.

Die Kolbenkühlung 33 sorgt für eine Erstarrung des Materials 11, 12 am Kolbenboden 35 und dichtet dadurch den Kolben 3 in Richtung der Aktorvorrichtung 110 ab, bzw. verhindert dadurch ein Einfließen flüssiger Schmelze 12 in Richtung der Aktorvorrichtung 110. Als Kühlmittel wird bevorzugt eine Kühlflüssigkeit eingesetzt, wobei diese über Anschlüsse und flexible Leitungen durch das Gehäuse 1 in einen Kühlanschluss 37 des ersten Kolbenteils 31 gefördert wird.

Die Kühlvorrichtung 50 im Flansch 5 wird durch das gleiche Kühlmittelsystem mit Kühlmittel versorgt.

Durch die Abkühlung des Materials 11, 12 am Kolbenboden 35 verringert sich lokal die Viskosität des Materials 11, 12, wodurch sich dieses beim Zurückziehen des Kolbens 3 von diesem löst, ohne Fäden zu ziehen. Dabei wird Raum für neues Material 10 geschaffen.

Fig. 1 zeigt den Kolben 3 in einer Ausgangsposition zur Befüllung des Druckkopfes 100 mit druckbarem Material 10, welches über die Zuführeinrichtung 2 in den Druckkopf 100 zugeführt wird.

Die Zuführeinrichtung 2 ist trichterförmig ausgebildet, wobei das Material 10, das bevorzugt ein Granulat ist, von oben in eine Öffnung 23 der Zuführeinrichtung 2 eingefüllt wird. Das Material 10 gelangt durch Schwerkraft bis zu einer Öffnung 21, bzw. einem Öffnungsquerschnitt zur Kolbenbuchse 4. Im unteren Bereich 24 der Zuführeinrichtung 2 oberhalb des Öffnungsquerschnitts 21, ist ein Luftkanal 20 einer Einblasvorrichtung 25 zum Lösen von Granulatstücken 10 voneinander angeordnet. Der Luftkanal 20 wird durch ein pneumatisches Ventil 22 mit Luftimpulsen 26 beaufschlagt. Die Einblasvorrichtung 25 umfasst das pneumatische Ventil 22 und den Luftkanal 20, wobei das Granulat 10 intervallartig derart mit Luftstöße beaufschlagt wird, dass dieses in Richtung des weiter oben gelegenen Bereichs der Zuführeinrichtung 2 geschleudert wird und sich dadurch die einzelnen Granulatstücke 10 voneinander lösen. Beim Ausschalten der Einblasvorrichtung 25 fällt das sich im unteren Bereich 24 der Zuführeinrichtung 2 befindliche Granulat 10 bei geöffnetem Öffnungsquerschnitt 21 in einen Hohlraum 40 der Kolbenbuchse 4.

Die Einblasvorrichtung 25 der Zuführeinrichtung 2 verhindert dadurch ein Verklemmen der Granulatstücke 10, wodurch ein Verstopfen der Zuführvorrichtung 2 verhindert wird und sie sorgt für ein sicheres Auffüllen der Kolbenbuchse 4 mit Granulat 10. Ferner können kleinere Durchmesser im Einlass der Zuführeinrichtung 2 verwendet werden.

Die Kolbenbuchse 4 weist ein in den Flansch 5 hineinragenden oberen Teilbereich 41 und ein in einen oberen Teilbereichs 60 des Düsenkopfes 6 hineinragenden unteren Teilbereich 42 auf. Zwischen dem oberen 41 und unteren 42 Teilbereich der Kolbenbuchse 4 ist ein Anschlag 43 angeordnet durch den der Flansch 5 und der Düsenkopf 6 voneinander getrennt sind. Die Öffnung 21, bzw. der Öffnungsquerschnitt ist im oberen Teilbereich 41 der Kolbenbuchse 4 angeordnet und weist an der Innenfläche der Kolbenbuchse 4 einen Anschnitt 44 auf. Der Anschnitt 44 bewirkt, dass beim Schließen des Öffnungsquerschnitts 21 durch den Kolben 3 Granulat 10 zwischen dem Anschnitt 44 und dem Kolbenboden 35 abgeschert wird, bis der Kolbenboden 35 eine Position unterhalb des Anschnitts 44 erreicht hat.

Die Kolbenbuchse 4 weist am Anschnitt 44 einen stumpfen Winkel auf, wobei dieser scharfkantig und gehärtet ist. Dabei ist eine lokale Härtung von Vorteil. Der Anschnitt 44 kann in einer alternativen Ausführung auch durch einen separaten Einsatz, analog einer Wendeplatte, gebildet sein.

Die Bauform des Anschnitts 44 sorgt in vorteilhafter Weise für eine Verringerung der notwendigen Kräfte zum Abscheren des Granulats 10, wodurch Energie gespart werden kann und die Materialen der Kolbenbuchse 4 und des Kolbens 3 weniger verschleißanfällig sind. Die Kante des Anschnitts 44 ist dabei extrem verschleißanfällig.

Am unteren Teilbereich 42 der Kolbenbuchse 4 ist ein Nierenstück 7 angeordnet ist, wobei das Nierenstück 7 eine zentrisch verlaufende Bohrung 70 zur Aufnahme einer Kolbennadel 32 des Kolbens 3 aufweist.

Das Nierenstück 7 weist ferner konzentrisch angeordnete Öffnungen 71 auf, die eine fluidische Verbindung zwischen einem in der Kolbenbuchse 4 angeordnetem Hohlraum 40 und einem in einem unterem Teil 62 des Düsenkopfs 6 angeordnetem Schmelzeraum 81 bilden. Der Hohlraum 40 ist innerhalb der Kolbenbuchse 4 angeordnet und wird durch die Innenseite der Kolbenbuchse 4, der Außenseite der Kolbennadel 32, der Oberseite des Nierenstücks 7 und der Unterseite 35 des Kolbens 3 gebildet.

Eine bevorzugte Aufgabe des Nierenstücks 7 ist die Wärmeleitung, bzw. Energieübertragung von den Heizelementen 61, 63 des Düsenkopfes 6 in die flüssige Phase 12 des Materials, bzw. der Schmelze 12. Dies wird insbesondere durch eine Erhöhung der Kontaktfläche zum Hohlraum 40 und somit der plastischen Phase 11 des Materials erreicht.

Eine weitere Aufgabe ist die Führung der Kolbennadel 32, wobei der Kontakt der Kolbennadel 32 innerhalb der Bohrung 70 zusätzlich für ein Anheizen der Kolbennadel 32 auf die benötigte Prozesstemperatur sorgt. Die Endgültige Prozesstemperatur wird erst im Düsenkopf 6 zu Düse 8 hin erreicht.

Während eines Befüllvorganges des Druckkopfes 100 wird die Düse 8 bei Bedarf verschlossen und beim Ansteuern des Kolbens 3 durch die Aktorvorrichtung 110 wird das sich im Hohlraum 40 und Schmelzeraum 81 angeordnete Material 10, 11, 12 durch den Kolbenvorschub komprimiert.

Der Düsenkopf 6 umfasst die Heizelemente 61, 63 des Druckkopfes 100, wobei ein erstes Heizelement 61 im oberen Düsenkopf 60 angeordnet ist und ein zweites Heizelement 63 im unteren Düsenkopf 62 angeordnet ist. Der obere Düsenkopf 60 weist einen Teilabschnitt 64 auf, der zwischen dem oberen 60 und dem unteren 62 Düsenkopf angeordnet ist und an dem das Nierenstück 7 aufliegt. Im Bereich der Düse 8 ist ein Kühlring 84 an dem Düsenkopf 6 angeordnet. Dieser kühlt das zu druckende Bauteil und es schirmt das Bauteil thermisch vom Druckkopf 100 ab.

Die Heizelemente 61, 63 im Düsenkopf 6 erhitzen das Material 10, 11, 12 innerhalb des Hohlraums 40, des Nierenstücks 7 und des Schmelzeraums 82 bis die flüssige Phase 12 des Materials ihre Prozesstemperatur erreicht hat und aus der Düse 8 ausgetragen werden kann. Der Schmelzeraum 82 ist derart ausgebildet, dass er sich von dem Teilabschnitt 64 des oberen Düsenkopfes 60 bis zur Düse 8 verjüngt.

Ferner umfasst der Druckkopf 100 weitere Sensoren, wobei im Schmelzeraum 81 ein Drucksensor 83 für den Druck p_{L}, und ein Temperatursensor 82 für die Temperatur T_{L} der flüssigen Phase 12 des Materials angeordnet ist. Weitere Sensoren sind an der Aktorvorrichtung 110 angeordnet, wobei ein Wegmesssystem 111 für die Position s des Kolbens 3, und ein Sensor 112 für die vom Kolben 3 auf das Material 10, 11 ausgeübte Kraft F oder für einen auf den Kolben 3 ausgeübten Hydraulikdruck p_{H}, vorgesehen sind. In einer alternativen Ausführung können die Sensoren 111, 112 auch am Kolben 3 des Druckkopfes 100 angeordnet sein.

Der Druckkopf umfasst eine nicht dargestellte Auswerteeinheit, die dazu ausgebildet ist, die Messwerte der Sensoren 36, 82, 83, 111, 112 auszuwerten und die Ergebnisse an die Steuer- und Regeleinheit 113 zur aktiven Regelung der Aktorvorrichtung 110 und zur aktiven Regelung der Heizelemente 61, 63 weiterzugeben.

Die Steuer- und Regeleinheit 113 ist für eine aktive Regelung der Aktorvorrichtung 110 zum Verfahren des Kolbens 3 entsprechend einer auszuführenden Betriebsstrategie zum Befüllen und Drucken und für eine aktive Regelung der Temperaturen des ersten 61 und zweiten 63 Heizelements vorgesehen.

Maßgeblich für die aktive Regelung der Aktorvorrichtung 110 sind die von der Auswerteeinheit empfangenen Sensorsignale und die aus den jeweiligen Werten berechneten Ergebnisse.

Der Drucksensor 83 für den Druck p_{L}, und der Temperatursensor 82 für die Temperatur T_{L} der flüssigen Phase 12 sind im Schmelzeraum 81 angeordnet. Das Wegmesssystem 111 für die Position s des Kolbens 3, und der Sensor 112 für die vom Kolben 3 auf das Material 10, 11 ausgeübte Kraft F oder für einen auf den Kolben 3 ausgeübten Hydraulikdruck p_{H}, sind an der Aktorvorrichtung 110 oder am Kolben 3 angeordnet.

Ferner ist am Kolben 3 der Temperatursensor 36 für die Temperatur T_{K} der plastischen Phase 11 des Materials angeordnet.

Die Signale s, F, p_{H}, T_{K}, T_{L}, p_{L} der Sensoren 111, 112, 36, 82, 83 werden an die Auswerteeinheit übertragen, anschließend in dieser oder in einer Cloud ausgewertet und die Ergebnisse entsprechend einer Betriebsstrategie als Steuergröße an die Steuer- und Regeleinheit 113 übertragen und die Aktorvorrichtung 110, sowie die Heizelemente 61, 63 entsprechend angesteuert.

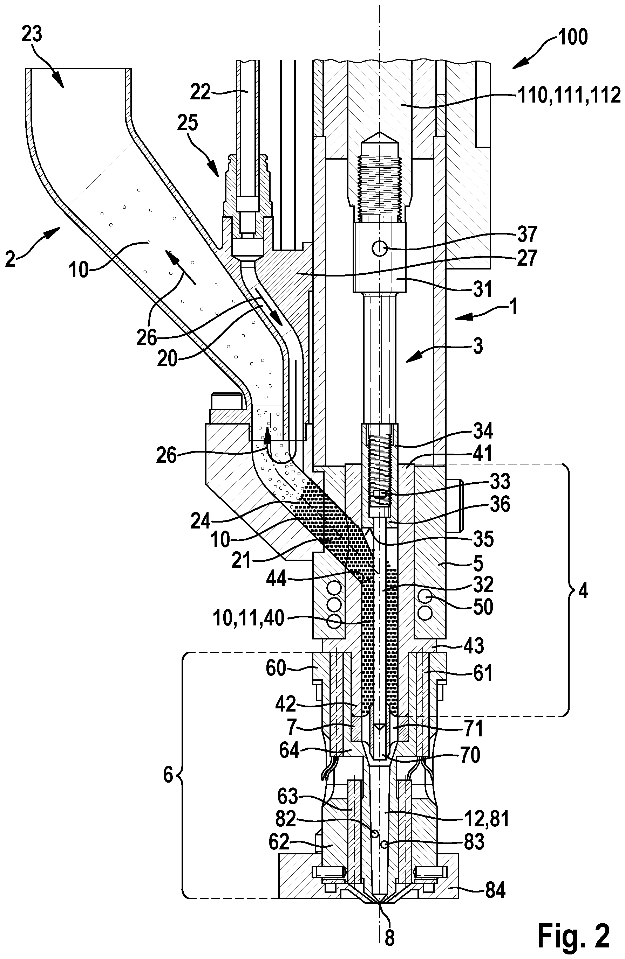

Fig. 2 zeigt eine weitere Darstellung des erfindungsgemäßen Druckkopfes 100, wobei erfindungsgemäß die feste Phase 10 des Materials die Granulatstücke 10 umfasst und die Zuführeinrichtung 2 die Einblasvorrichtung 25 zum Lösen der Granulatstücke 10 voneinander aufweist.

Die Einblasvorrichtung 25 umfasst das pneumatisches Ventil 22 und den Luftkanal 20, wobei der Luftkanal 20 in einem Gehäuseteil 27 der Zuführeinrichtung 2 angeordnet ist und in einem unteren Bereich 24 der Zuführeinrichtung 2 oberhalb des Öffnungsquerschnitts 21 des Flansches 5 mündet.

Der Luftkanal 20 ist durch das pneumatisches Ventil 22 mit Luftimpulsen 26 beaufschlagbar, wobei die Luftimpulse 26 derart im unteren Bereich 24 auf die Granulatstücke 10 wirken, dass sich diese voneinander lösen.

Die Zuführeinrichtung 2 ist trichterförmig ausgebildet, wobei die Granulatstücke 10 von oben in eine Öffnung 23 der Zuführeinrichtung 2 eingefüllt werden. Das Material 10 gelangt durch Schwerkraft bis zum Öffnungsquerschnitt 21 des Flansches 5 bis zur Kolbenbuchse 4, bzw. zum Öffnungsquerschnitt 21 der Kolbenbuchse 4. Im unteren Bereich 24 der Zuführeinrichtung 2 oberhalb des Öffnungsquerschnitts 21 des Flansches 5, ist ein Luftkanal 20 der Einblasvorrichtung 25 angeordnet. Der Luftkanal 20 wird durch das pneumatisches Ventil 22 mit Luftimpulsen 26 beaufschlagt. Die Einblasvorrichtung 25 umfasst das pneumatische Ventil 22 und den Luftkanal 20, wobei das Granulat 10 intervallartig derart mit Luftstöße beaufschlagt wird, dass dieses in Richtung des weiter oben gelegenen Bereichs der Zuführeinrichtung 2 geschleudert wird und sich dadurch die einzelnen Granulatstücke 10 voneinander lösen. Beim Ausschalten der Einblasvorrichtung 25 fällt das sich im unteren Bereich 24 der Zuführeinrichtung 2 befindliche Granulat 10 bei geöffnetem Öffnungsquerschnitt 21 in einen Hohlraum 40 der Kolbenbuchse 4. Die Einblasvorrichtung 25 der Zuführeinrichtung 2 verhindert dadurch ein Verklemmen der Granulatstücke 10, wodurch ein Verstopfen der Zuführvorrichtung 2 verhindert wird und sie sorgt für ein sicheres Auffüllen der Kolbenbuchse 4 mit Granulat 10. Der Prozess des Nachfüllens erfordert das Hinterblasen des Granulats 10, wodurch ein Effekt des Anhebens des Granulats entsteht, so dass dieses anschließend in den Druckkopf 100 rutscht. Das Aufwirbeln ist für einen automatisierten Einsatz notwendig und durch den entstehenden Schwerkraftimpuls, bzw. Schlag rutscht das Granulat 10 nach.

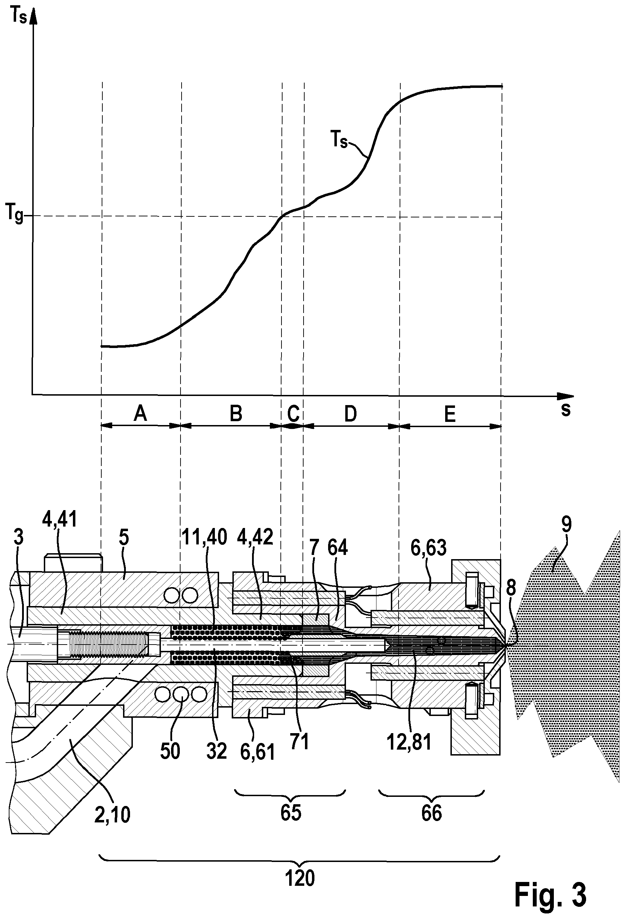

Fig. 3 zeigt einen Ausschnitt des erfindungsgemäßen Druckkopfes 100 in einer um 90° gedrehten Ansicht, wobei ausgehend vom oberen Teilbereich 41 der Kolbenbuchse 4 über das Nierenstück 7 bis hin zur Düse 8 Zustandszonen A, B, C, D, E des mit Material 10, 11, 12 befüllten Druckkopfes 100 während des Betriebs dargestellt sind. Die Zustandszonen A, B, C, D, E stellen einen Aggregatzustand des Materials 10 in Abhängigkeit seiner Temperatur Ts dar, wobei der Aggregatzustand des Materials 10 über die Zustandszonen A, B, C, D, E hinweg von einer festen Phase 10 über eine plastische Phase 11 in eine flüssige Phase 12 veränderbar ist.

Die Temperatur T_{S}, bzw. der Temperaturverlauf des Materials 10, 11, 12 innerhalb des Druckkopfes 100 ist in einem über dem Druckkopf 100 dargestellten Diagramm gezeigt, wobei diese über den Weg s, bzw. der Länge eines Arbeitsbereichs 120 des Druckkopfes 100 dargestellt ist.

Die Zustandszonen A, B, C, D, E des Druckkopfes 100 umfassen eine Kalte Zone A mit Material in fester Phase 10, eine Plastifizierungszone B mit Material in plastischer Phase 11, eine Schmelzezone D und eine Prozesszone E mit jeweils Material in flüssiger Phase 12. Ferner umfassen die Zustandszonen eine Mischzone C mit Material in plastischer 11 und flüssiger 12 Phase.

Die Kühlvorrichtung 50 im Flansch 5 und die im Kolben 3 integrierte Kolbenkühlung 33 sind vorgesehen, um die Temperatur T_{S} der plastischen Phase 11 des Materials in der Plastifizierungszone B auch dann unterhalb einer Glasübergangstemperatur T_{g} zu halten, ab der das Material 11 plastifiziert und in eine flüssige Phase 12 übergeht. Die Plastifizierungszone B mit dem Material in plastischer Phase 11 beschreibt in den hier gezeigten Ausführungen einen Zustand des Materials, bzw. des Granulats in dem sich die Viskosität des Granulats bereits verändert, wodurch ein Verdichtungs- und ein Mischprozess optimiert werden, jedoch geht die plastische Phase 11 des Granulats gerade noch nicht in die flüssige Phase 12 über.

Ferner umfasst der Düsenkopf 6 zwei Heizzonen 65, 66.

In der ersten Heizzone 65 sind ein Teilbereich der Plastifizierungszone B, die Mischzone C und ein Teilbereich der Schmelzezone D angeordnet, wobei ein erstes Heizelement 61 im oberen Düsenkopf 60 derart angeordnet ist, dass die Heizenergie vom ersten Heizelement 61 über den unteren Teilbereich der Kolbenbuchse 42, das Nierenstück 7 und einem Teilabschnitt 64 des oberen Düsenkopfs in das Material 10, 11, 12 einbringbar ist.

In der zweiten Heizzone 66 sind ein Teilbereich der Schmelzezone D und die Prozesszone E angeordnet, wobei ein zweites Heizelement 63 im unteren Düsenkopf 62 derart angeordnet ist, dass die Heizenergie vom zweiten Heizelement 63 über den unteren Düsenkopf 62 in die flüssige Phase 12 des Materials einbringbar ist.

Aus dem Diagramm ist zu entnehmen, dass sich die Temperatur T_{S} des Materials 10, 11, 12 stetig über den Weg s des Arbeitsbereichs 120 des Druckkopfes 100 erhöht. In der Kalten Zone A ist die Wirkung der Kühlvorrichtung 50 des Flansches 5 vorherrschend, wodurch das Granulat 10 nur langsam über den Weg s erwärmt wird. Ab der Plastifizierungszone B beginnt der Einfluss der ersten Heizzone 65 mit dem ersten Heizelement 61 zuzunehmen, wobei die Temperaturkurve bis zum Erreichen der Glasübergangstemperatur T_{g} stark ansteigt und ab dort die Mischzone C beginnt. Die Temperatur Ts steigt in der Mischzone C mit einer geringeren Steigung weiter an bis die Schmelzezone D erreicht wird. Dort beginnt die Einflusszone der zweiten Heizzone 66 mit dem zweiten Heizelement 63, wobei dieses die Temperatur T_{S} der Schmelze 12 stark ansteigen lässt, bis die Prozesstemperatur der Schmelze 12 in der Prozesszone E erreicht wird und druckfähige Schmelze 12 entstanden ist.

Die Temperatur T_{S} muss so eingestellt sein, dass das Granulat 10 beim Befüllen in den Hohlraum 40 hineinrieseln kann, ohne zu verkleben aber auch derart vorgewärmt wird, dass ein Abscheren des Materials 10, 11 am Anschnitt 44 mit möglichst wenig Kraftaufwand möglich ist. Das Temperaturmanagement des Druckkopfes 100 ist dabei so eingestellt, dass die Kühlvorrichtung 50 im Flansch 5 eine Kühltemperierung von ca. 40°C in die Kolbenbuchse 4 und dadurch in das Material 10, 11 einbringt und das erste Heizelement 61 der ersten Heizzone 65 eine Heiztemperierung von ca. 30°C unterhalb der Glasübergangstemperatur T_{g}, bzw. der Schmelzetemperatur des Materials 10, 11, 12.

Dieser Effekt wird durch die Kolbenkühlung 33 unterstützt. Durch die Abkühlung des Materials 11, 12 am Kolbenboden 35 verringert sich lokal die Viskosität des Materials 11, 12, wodurch sich dieses beim Zurückziehen des Kolbens 3 von diesem löst, ohne Fäden zu ziehen. Dabei wird Raum für neues Material 10 geschaffen, wenn der Kolben 3 den Öffnungsquerschnitt 21 zur Zuführeinrichtung 2 freigibt.

Der Temperatursensor 36 am Kolbenboden 35 misst die Temperatur T_{K} an der Kontaktstelle des Kolbens 3 zum Material 10, 11, wodurch die Kühl- und die Heizleistung des Druckkopfes 100 berechnet werden kann, so dass die Glasübergangstemperatur T_{g} des Materials 10 nicht überschritten wird. Aufgrund der Anordnung des Temperatursensor 36, bzw. Temperaturfühlers am Kolbenboden 35 ist ein kolbenpositionsabhängiges Regeln der Heizelemente 61, 63 und dadurch ein Einstellen der Temperatur Ts möglich. Dadurch wird ein schnelleres Aufheizen des Materials 11, 12 erreicht. Das Thermomanagement des Druckkopfes 100 ermöglicht so auch eine Verarbeitung von Kunststoffen mit niedriger Schmelztemperatur von kleiner 60 bis 80°C.

Während eines Verdichtungsprozesses zur Herstellung von flüssiger Phase 12 des Materials in der Prozesszone E ist die Düse 8 verschlossen. Die Düse 8 kann beispielsweise durch ein nicht dargestelltes Verschlussventil verschlossen werden, oder durch das Positionieren des Druckkopfes 100 auf eine Platte im Bauraum des Druckers. Ferner kann auch ein bereits gedruckter Bereich eines Bauteils 9 angefahren werden und die Düse 8 dadurch verschlossen werden. Die Kolbennadel 32 ist während des Verdichtungsprozesses derart in den Schmelzeraum 81 eingetaucht und bewegt sich weiter in diesen hinein, dass dadurch Teile der flüssigen Phase 12 aus der Schmelzezone D zurück in die Mischzone C verdrängt werden, wodurch sich in der Mischzone C die flüssige Phase 12 mit der plastischen Phase 11 aus der Plastifizierungszone B vermischt. Die flüssige Phase 12 aus der Schmelzezone D wird dabei aus dem oberen Bereich des Schmelzeraums 81 durch die Öffnungen 71 des Nierenstücks 7 zurück in den Hohlraum 40 der Kolbenbuchse 4 in die Mischzone C verdrängt.

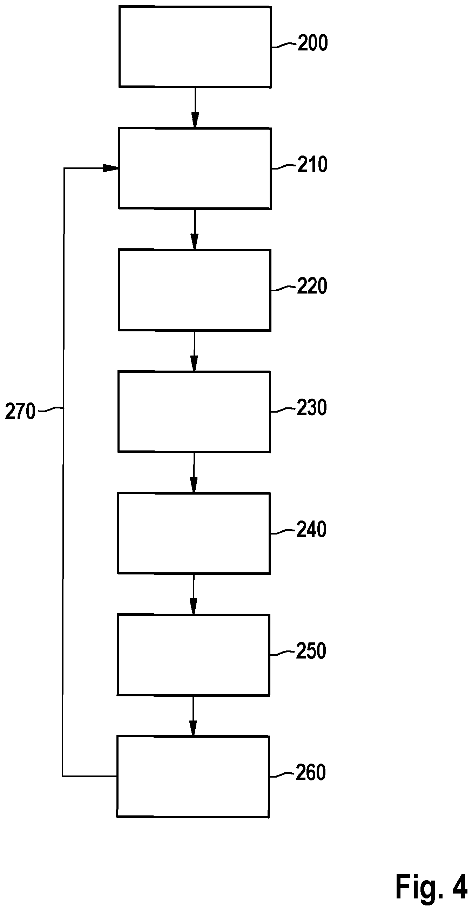

Fig. 4 zeigt ein Ablaufdiagramm eines Verfahrens 200 zum Betreiben des erfindungsgemäßen Druckkopfes 100, wobei das Verfahren 200 folgende Schritte umfasst:
- Befüllen 210 des Hohlraums 40 mit druckbarem Material 10 durch die Zuführeinrichtung 2,
- Verschließen 220 eines Öffnungsquerschnitts 21 der Kolbenbuchse 4 durch Vorschub, bzw. Verfahren des Kolbens 3 ausgehend von einer Startposition 3a in Richtung der Düse 8,
- Verdichten 230 des Materials 10,
- Umwandeln 240 des Materials von einer festen Phase 10 in eine flüssige Phase 12,
- Ausbringung 250 der flüssigen Phase 12 des Materials aus der Düse 8 zum Drucken eines dreidimensionalen Bauteils 9 bis eine Endposition 3z des Kolbens 3 erreicht wird oder bis zur Fertigstellung des Bauteils 9,
- Zurückfahren 260 des Kolbens 3 in die Startposition 3a und
- Wiederholung 270 der Schritte 210 bis 260 bis zur Beendigung des Verfahrens 200.

Zumindest das Verschließen 220, das Verdichten 230, das Umwandeln 240 und die Ausbringung 250 des Verfahrens 200 werden durch eine aktive Regelung der Aktorvorrichtung 110 durch die Steuer- und Regeleinheit 113 durchgeführt, wobei die Ergebnisse der Auswerteeinheit aus den Messwerten der Sensoren 36, 82, 83, 111, 112 an die Steuer- und Regeleinheit 113 weitergegeben werden.

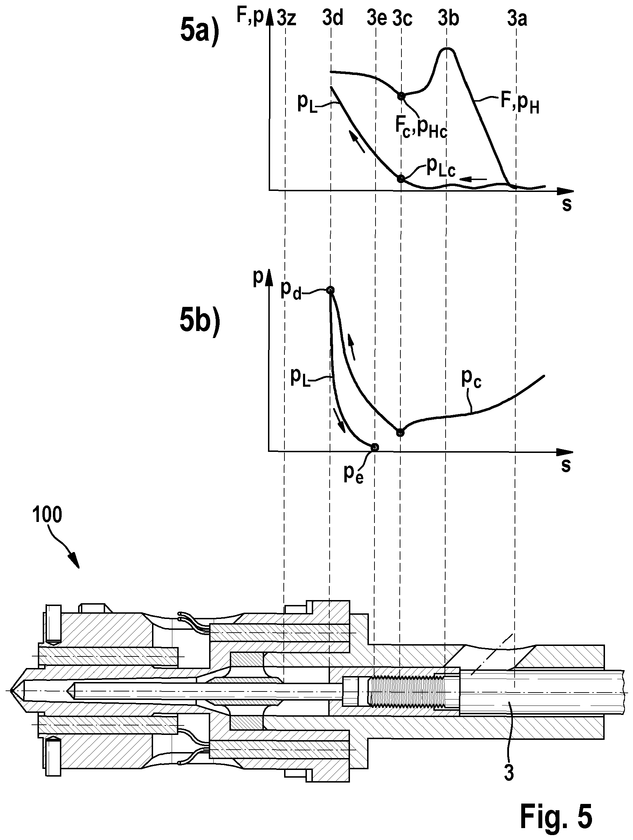

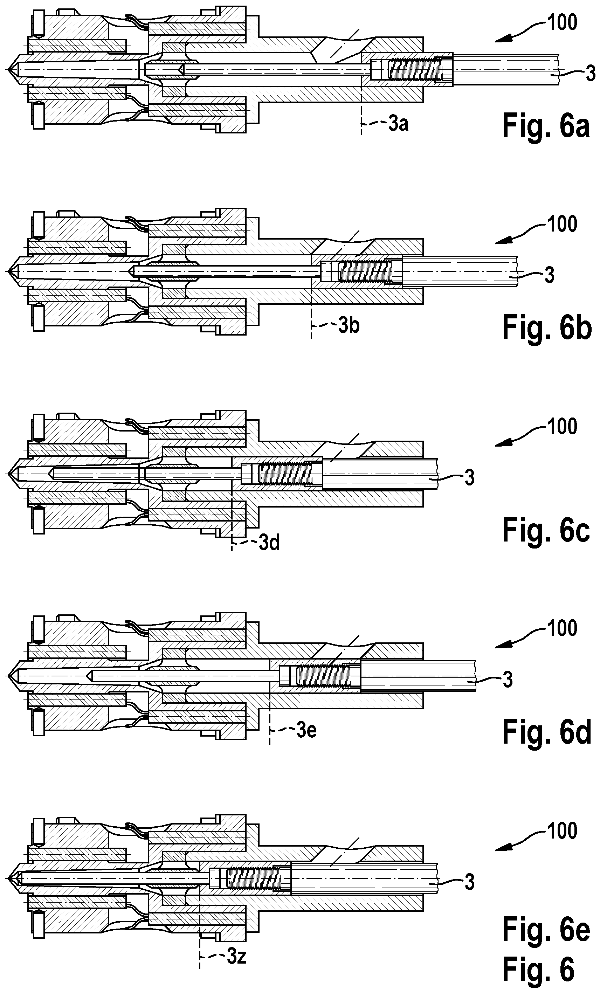

Fig. 5 zeigt einen Ausschnitt des erfindungsgemäßen Druckkopfes 100 und zwei Diagramme 5a, 5b, die einen Druck-, bzw. Druck-, Kraftverlauf während des Betriebs, bzw. verschiedener Verfahrensschritte des Verfahrens 200 zum Betreiben des Druckkopfes 100 darstellen. Fig. 6 zeigt die unterschiedliche Positionen des Kolbens 3 zu den verschiedenen Verfahrensschritten, bzw. Zuständen aus Fig. 5 beginnend bei der Startposition 3a bis zur Endposition 3z des Kolbenbodens 35. Während der Ausführung der Verfahrensschritte sind die Kühlvorrichtungen 50, 33 im Flansch 5 und Kolben 3, sowie die Heizelemente 61, 63 aktiv und der Schmelzeraum 81, sowie das Nierenstück 7 sind mit Schmelze 12 gefüllt und im unteren Teilbereich des Hohlraums 40 befindet sich noch Granulat in plastischer Phase 11.

Die Ausschnitte des dargestellten Druckkopfes 100 entsprechen dem des in den Fig. 1 bis Fig. 3 dargestellten erfindungsgemäßen Druckkopfes 100, so dass die Bezugszeichen der vorherigen Figuren zur Beschreibung der Figuren 5 und 6 herangezogen werden, wobei neue Merkmale und Bezüge, beispielsweise die jeweilige Position des Kolbens 3 mit Bezug zum Kolbenboden 35 in den Figuren 5 und 6 gekennzeichnet ist.

Fig. 5 zeigt im ersten Diagramm 5a zwei Kurvenverläufe, die über dem vom Kolben 3 zurückgelegten Weg s aufgetragen sind. Der Weg s wird von dem Wegmesssystem 111, bzw. Wegsensor 111 an der Aktorvorrichtung 110 oder am Kolben 3 gemessen.

Die obere Kurve stellt einen Kraft-, Druckverlauf für die vom Kolben 3 auf das Material 10, 11 ausgeübte Kraft F oder für den auf den Kolben 3 ausgeübten Hydraulikdruck p_{H} während des Vorschubs des Kolbens 3 durch die Aktorvorrichtung 110 beim Verschließen 220 und Verdichten 230 dar, wobei der Kraft-, bzw. Drucksensor 112 an der Aktorvorrichtung 110 oder am Kolben 3 angeordnet ist.

Die untere Kurve im Diagramm 5a stellt einen Druckverlauf des Schmelzedrucks p_{L} im Schmelzeraum 81 über dem Weg s des Kolbens 3 während des Verdichtens 230 dar. Der Drucksensor 83 für den Druck p_{L} der flüssigen Phase 12, bzw. der Schmelze 12 ist im Schmelzeraum 81 angeordnet.

Im zweiten Diagramm 5b ist ein Teilausschnitt der unteren Kurve des ersten Diagramms 5a dargestellt, wobei auch hier der Druckverlauf des Schmelzedrucks p_{L} im Schmelzeraum 81 über dem Weg s des Kolbens 3 während des Verdichtens 230 dargestellt ist (Kurvenverlauf von p_{c} zu p_{d}).

Fig. 6a zeigt eine Startposition 3a des Kolbens 3 während des Befüllprozesses 210 des Druckkopfes 100, wobei der Kolbenboden 35 an der Oberseite der Öffnung 21 der Kolbenbuchse 4 positioniert ist. Der Befüllprozess 210 wird auch Refillprozess genannt, da es sich um einen wiederkehrenden Ablauf handelt, der während des Druckens eines Bauteils 9 beliebig wiederholt wird. Die in Fig. 6a gezeigte Position des Kolbens 3 ist analog der Position des Kolbens 3 aus Fig. 1. Die Öffnung 21, bzw. der Öffnungsquerschnitt 21 der Kolbenbuchse 4 ist geöffnet und das Granulat 10 kann über die Zuführeinrichtung 2 in den Hohlraum 40 der Kolbenbuchse 4 eingebracht werden. Anschließend wird der Kolben 3 durch die Aktorvorrichtung 110 in die in Fig. 6b gezeigte Position 3b gesteuert. Der Kolbenboden 35 gleitet dabei am Anschnitt 44 der Kolbenbuchse 4 vorbei und das von der Öffnung 21 in den Hohlraum 40 überstehende Granulat 10 wird zwischen Kolbenboden 35 und Anschnitt 44 abgeschert. Daher wird diese Position Abscherposition 3b genannt. Nach dem Abscheren ist der Öffnungsquerschnitt 21 verschlossen 220.

Der Kraft-, Druckverlauf F, p_{H} steigt von der Startposition 3a bis zur Abscherposition 3b an, wobei der Kraftaufwand der Aktorvorrichtung 110 am Anschnitt 44, bzw. an der Abscherposition 3b am höchsten ist, da die Aktorvorrichtung 110 die Kraft zum Abscheren des Granulats 10 aufbringen muss. Der Kraftaufwand lässt sich durch geeignete Maßnahmen wie die Optimierung der Anschnittgeometrie in Verbindung mit der Beschaffenheit des Kolbenbodens 35 und einer Vorerwärmung des Granulats 10 reduzieren. Der Druckverlauf p_{L} der Schmelze 12 verändert sich dahingegen nur gering, bzw. steigt kaum an, da die Düse 8 noch geöffnet ist und sich im Schmelzeraum 81 kein Druckaufbau einstellt.

Anschließend wird der Kolben 3, kraft-, bzw. druckgesteuert durch die Aktorvorrichtung 110 bis zur Position 3c gefahren. Beim Verschieben des Kolbens 3 wird die auf das Material, bzw. Granulat 10, 11 ausgeübte Kraft F oder der auf den Kolben 3 ausgeübter Hydraulikdruck p_{H}, sowie der Druck p_{L} in der Schmelze 12 gemessen.

Die Position 3c wird definiert durch den Kraft-, bzw. Druckanstieg, das heißt die Position 3c wird angesteuert, wobei kein direkter Punkt, sondern eine Flanke der im Diagramm 5a dargestellten Kurven angesteuert wird. Die Flanke entsteht an einem Wechselpunkt p_{Lc}, F_{c}, p_{Hc} von jeweils der Geraden mit geringer, bzw. keiner Steigung (der Bereich von Position 3a bis Position 3c) bis zum Anstieg der Kurve (an Position 3c), an der eine vordefinierte Steigung, bzw. ein vordefinierter Steigungswinkel erreicht und/oder überschritten wird. Die Position 3c befindet sich im ersten Drittel der Plastifizierungszone B. Das Granulat 10, 11 wird in der Plastifizierungszone B durch den Vorschub des Kolbens 3 komprimiert, wobei sich gleichzeitig in der Schmelzezone D zwischen dem Hohlraum 40 und der Düse 8 Schmelze 12 befindet. Das plastifizierte Granulat 11 wird dadurch in der Mischzone C in die Schmelze 12 hineingedrückt.

Durch das Absenken des Kolbens 3 und analog der Kolbennadel 32 in Richtung Düse 8 tritt bereits Schmelze 12 aus der Düse 8 aus, wodurch erreicht wird, dass möglicherweise noch vorhandene Luft, bzw. Lufteinschlüsse aus dem Düsenkopf 6 verdrängt werden. Dadurch wird die Düse 8 frei.

Die Position 3c wird verfahrens- und materialbedingt mit einer Toleranz versehen, wodurch bei verschiedenen, nacheinander durchgeführten Befüllvorgängen des Druckkopfes 100 die Position 3c des Kolbens 3 leicht unterschiedlich sein kann. Die Position 3c ist daher kein fester Punkt. Wenn die Position 3c innerhalb der vorgegebenen Toleranz liegt, ist sichergestellt, dass der Befüllprozess 210 erfolgreich war, das heißt, dass genug Granulat 10 in den Hohlraum 40 eingefüllt wurde und das der Schmelzeraum 81 bereits mit Schmelze 12 befüllt ist. Wenn die Flanke beispielsweise zu weit vor der Position 3c beginnt, ist im Bereich vom Kolbenboden 35 bis zur Düse 8 zu viel hochviskoses, bzw. hartes Material 10, 11 und der Mischprozess in der Mischzone C war ggf. nicht erfolgreich. Wenn die Flanke beispielsweise erst weit hinter der Position 3c beginnt, ist ggf. zu wenig Material 10 nachgefüllt worden.

Nach Erreichen der Position 3c wird die Düse 8 des Druckkopfes 100 verschlossen.

Das Vorverdichten ist abgeschlossen und zum Verdichten 230 wird der Kolben 3 ausgehend von Position 3c druckgesteuert vorgeschoben, bis ein vorab definierter Peakdruck p_{d} erreicht wird und der Kolbenboden 35 auf die in Fig. 6c gezeigte Position 3d gefahren wurde. Der Peakdruck p_{d} kann je nach Material 10 und Bedarf zwischen ca. 100 und 300bar liegen.

Anschließend wird die sogenannte Peakdruckposition 3d für einen materialabhängigen vordefinierten Zeitraum gehalten. Der Kolbenboden 35 ragt dabei in die erste Heizzone 65 und die Kolbennadel 32 in den Schmelzeraum 81 hinein und während des Haltens fließt ein Teil der Schmelze 12 aus dem Schmelzeraum 81 des Düsenkopfes 6 durch die Öffnungen 71 des Nierenstücks 7 zurück in die Mischzone C in das dort befindliche plastische Granulat 10. Dadurch wird Restluft verdrängt und Schmelze 12 wird in der Mischzone C homogenisiert. Dadurch wird ein besserer Energiefluss erreicht und ein homogeneres Material 11, 12 erzeugt. Die zurückfließende Schmelze 12 wird plastisch und die Granulatanteile 11, welche in das Nierenstück 7 geschoben werden, werden schmelzeförmig. Dadurch entsteht ein Vermischen des Materials 11, 12.

Der hier beschriebene Haltevorgang dient zudem zur Analyse und zu einem Systemcheck des Druckkopfes 100, da sich folgende Effekte bei der Druckmessung des Drucks p_{L} ergeben können. Ein Druckanstieg des Drucks p_{L} in der Schmelze 12 würde bedeuten, dass die Schmelze 12 ausgast, weil beispielsweise die Temperatur T_{L} zu hoch ist. Zu hohe Schmelzetemperaturen T_{L} sind nicht gewünscht, da Luftplasma entstehen kann, was zu einem chemischen Zerfall führen würde.

Ein starker Druckabfall des Schmelzedrucks p_{L} könnte beispielsweise bedeuten, dass das System des Druckkopfs 100 undicht ist oder noch zu viel Luft im System war. Dieser Effekt könnte auftreten, wenn beispielsweise zu viel kaltes Material 10, 11 im Hohlraum 40 vorhanden war, weil das Temperaturmanagement des Druckkopfes 100 nicht optimal eingestellt war.

Nach Ablauf des vordefinierten Zeitraums wird der Kolben 3 aus der Peakdruckposition 3d von der Aktorvorrichtung 110 druckgesteuert zurückgefahren, bis ein Zieldruck pₑ von ca. 0bar erreicht wird. Das System wird entspannt. Dadurch wird erreicht, dass die Schmelze 12 druckentlastet und entlüftet ist, wodurch eine reine Schmelze 12, insbesondere in der Prozesszone E entstanden ist, die nun qualitativ hochwertig und druckfähig ist. Bei Erreichen des Zieldrucks pₑ wird die in Fig. 6d dargestellte Zieldruckposition 3e erreicht, wobei der Kolbenboden 35 außerhalb der ersten Heizzone 65 im Bereich des Anschlags 43 der Kolbenbuchse 4 positioniert ist.

Der nun gemessene Druckunterschied zwischen dem Druck p_{d} der Peakdruckposition 3d und dem Druck pₑ der Zieldruckposition 3e und der zwischen den beiden Punkten 3d, 3e zurückgelegte Weg s ergibt eine Federkonstante der flüssigen Phase 12 des Materials, bzw. der Schmelze 12.

Die Federkonstante ergibt sich aus der Kompressibilität der Schmelze 12 und führt zu einem Korrekturfaktor, bzw. Formfaktor, der zur exakten Ansteuerung des Kolbens 3 durch die Aktorvorrichtung 110 benötigt wird.

Aufgrund der Kompressibilität der Schmelze entsprechen beispielsweise 1,2 Volumeneinheiten eines geometrischen, durch den Kolben 3 zurückgelegten Kolbenwegs s, 1,0 Volumeneinheiten eines ausgetragenen Volumens der Schmelze 12. Ohne Kompressibilität wäre das Verhältnis 1:1.

Dadurch wird erreicht, dass die Aktorvorrichtung 110 den Kolben 3 geregelt ansteuern kann, wobei die Federkonstante es unter anderem ermöglicht, dass der reale Austrag der Schmelze 12 den korrekten, berechneten Volumenstrom der Schmelze 12 in Abhängigkeit einer Bahngeschwindigkeit des bewegten Druckkopfes 100 beim Drucken erreicht. Das heißt, dass an jeder Druckposition bei jeder Bahngeschwindigkeit des Druckkopfes 100 die jeweils benötigte Menge Schmelze 12 auf das Bauteil 9 ausgebracht wird.

Anschließend wird der Druckprozess 250 über ein aktives Dekomprimieren durch ein Zurückziehen des Kolbens 3 vorbereitet.

Der Kolben 3 wird dabei abhängig von der ermittelten Federkonstante um ca. 1 bis 2 Millimeter zurückgezogen, wodurch erreicht wird, dass keine Schmelze 12 aus der Düse 8, bzw. Düsenöffnung austritt, wenn diese anschließend geöffnet wird. Dies wäre bei einem weiteren Halten der Position 3e aufgrund des vorhandenen offenen Systems durch den Einfluss der Schwerkraft der Fall. Gleichzeitig wird die Schmelze 12 analog einer Feder entlastet.

Anschließend beginnt die weitere Druckvorbereitung durch Kompression.

Das Gesamtsystem des Druckkopfes 100 ist, wie bereits beschrieben, ein kompressibles System, da die Schmelze 12 beispielsweise eine Kompression von ca. 20% aufweisen kann. Daher entspricht das durch den Vorschub des Kolbens 3 verdrängte Volumen nicht dem Volumen des ausgetragenen Materials 12, wodurch sich ungenaue und unregelmäßige Austräge ergeben können. Das mögliche Volumen der Schmelze 12 für einen Vorschub des Druckprozesses 250 wird definiert von der Zielposition 3e und dem Weg zur in Fig. 6e gezeigten Endposition 3z.

Aufgrund des oben beschriebenen Effekts wird die Schmelze 12 während des Druckbeginns komprimiert. Die Kompression der Schmelze 12 im Schmelzeraum 81 zu Druckbeginn wird zu einem Teil über Reibung an der Düsenöffnung der Düse 8 beim "Herauspressen" der Schmelze 12 erzeugt und zu einem Teil über den Widerstand beim Drucken auf das Bauteil 9 oder einen Substratträger, auf dem das Bauteil 9 aufgebaut wird.

Ein gleichmäßiger Austrag der Schmelze 12 wird durch eine intelligente Regelung des Druckkopfes 100 erreicht, wobei asynchrone, um einen Korrekturfaktor angepasste Bewegungen des Kolbens 3 durch den Einsatz eines elektronischen Getriebes an der Aktorvorrichtung 110 erfolgen. Der Korrekturfaktor, der sich insbesondere aus der ermittelten Federkonstante der Schmelze 12 ergibt, wird sozusagen in das System eingemischt. Daher weist der erfindungsgemäße Druckkopf 100 keine Einschränkung auf synchrone Bewegungen analog üblicher NC Systeme auf.

Der Druckprozess 250 wird druckgeregelt durchgeführt, wobei der Druck p_{L} der Schmelze 12 permanent über den Drucksensor 83 im Düsenkopf 6 gemessen wird. Der gemessene Druck p_{L} ist der Druck der durch Austrag der Schmelze 12 auf das Bauteil 9, bzw. auf den Substratträger (falls noch kein Bauteil vorhanden) entsteht. Ohne diesen Effekt, dass man auf ein Objekt druckt, wäre kein Gegendruck an der Düse 8 vorhanden, außer dem eines Reibungsdrucks, wodurch zu viel Material/Schmelze 12 aus der Düse 8 ausgetragen werden würde.

Der Druckprozess 250 wird gestartet, indem aktiv Schmelze 12 durch die intelligente Regelung und Ansteuerung des Kolbens 3 eingemischt wird. Dabei wird "mehr" Hub ausgeführt, um die Kompressibilität der Schmelze 12 auszugleichen. Dabei wird prinzipiell zu viel Schmelze 12 aus der Düse 8 gedrückt, jedoch wird der Drucksensor 83 parallel zur Einmischung der Schmelze 12 ausgelesen, wodurch entsprechend druckabhängig gegengeregelt werden kann.

Eine elektrisch angetriebene Aktorvorrichtung 110 erweist sich für diesen Fall als dynamisch und sehr effektiv.

Während des Druckprozesses 250 wird kontinuierlich die Schmelzetemperatur Ts gemessen und in der Heizzone 2 wird die Schmelze 12 über die Heizelemente 63 im Düsenkopf 6 auf den erforderlichen Sollwert der Prozesstemperatur im Bereich der Prozesszone E geregelt.

Der Kolben 3 wird zum Druckstart entsprechend einer Bahngeschwindigkeit des Druckkopfes 100 von der Aktorvorrichtung 110 angesteuert, wodurch Schmelze 12 aus der Düse 8 ausgetragen wird.

Während des Druckprozesses wird die Steuer- und Regeleinheit 113 des Druckkopfes 100 aktiviert und greift aktiv in die Ansteuerung der Aktorvorrichtung 110 ein, um beispielsweise bei Bedarf einen additiven Sollwert, bzw. eine additive Menge an Material 12 zuzumischen. Falls beispielsweise ein additiver Sollwert zugemischt wird und dadurch mehr Material 12 aus der Düse 8 ausgetragen, bzw. extrudiert wird als durch eine kontinuierliche Ansteuerung, erhöht sich als Resultat auch der Druck p_{L} am Düsenkopf 6. Der additive Sollwert ist dabei der eingemischte Wert, bzw. der zusätzliche Kolbenweg, der zurückgelegt werden muss, um entsprechend des Korrekturwerts, ermittelt aus der Federkonstante, das gewünschte Volumen an Schmelze 12 auszutragen. Dadurch wird ein eingeschwungener Zustand erreicht, wodurch die auf das Bauteil 9 ausgetragene Menge der Schmelze 12 konstant bleibt.

Durch den Vorschub des Kolbens 3 und der daraus resultierenden Druckerhöhung in der Schmelze 12 wird die virtuelle "Feder" der Schmelze 12 kleiner, bzw. steifer. Dieser entstandene technische Effekt wird durch die Steuer- und Regeleinheit 113 nachgeregelt, wodurch weiterhin während des Druckprozesses 250 die exakte Menge der Schmelze 12 aus der Düse 8 ausgetragen wird.

Der Einsatz der Kolbennadel 32 sorgt dabei für den vorteilhaften Effekt, dass durch diese eine direkte Volumenverdrängung innerhalb der Schmelze 12 im Schmelzeraum 81 möglich ist, wodurch eine kleinere Federkonstante erreicht wird. Die kleine Federkonstante ermöglicht wiederum eine hohe Dynamik des Druckkopfes 100. Der Effekt ergibt sich daraus, dass durch die Kolbennadel 32 eine direktere Druckübertragung auf die Schmelze 12 erfolgt. Beim Vorschub des Kolbens 3 überträgt somit nicht nur der Kolbenboden 35 einen Druckimpuls zum Austragen der Schmelze 12 aus der Düse 8, sondern auch die näher an der Düse 8 positionierte Kolbennadel 32.

Der Druckprozess 250 ist maximal ausführbar, bis der Kolbenboden 35 die Position 3z erreicht, wobei die Position 3z derart festgelegt ist, dass der Kolbenboden 35 gerade nicht einen mechanischen Anschlag erreicht, sondern wie in Fig. 6e dargestellt, kurz vor Erreichen des Nierenstücks 7 zum Stehen kommt. Danach kann kein Material 12 mehr ausgetragen werden und der oben beschriebene Befüllprozess 210, bzw. Refillprozess wird erneut gestartet.

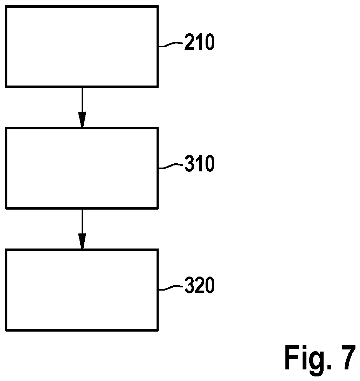

Fig. 7 zeigt ein Ablaufdiagramm eines erfindungsgemäßen Verfahrens zum Befüllen 210 des erfindungsgemäßen Druckkopfes, wobei ein beheizbarer Hohlraum 40 des Druckkopfes 100 mit druckbarem Material 10 durch die Zuführeinrichtung 2 befüllt wird.

Das Befüllen 210 des Hohlraums 40 mit druckbarem Material 10 durch die Zuführeinrichtung 2 umfasst folgende Schritte:
- Einfüllen 310 der Granulatstücke 10 über die Öffnung 23 der Zuführeinrichtung 2 in den Druckkopf 100 und
- Erzeugen 320 von Luftimpulsen 26 zum Lösen der Granulatstücke 10 voneinander.

Das Einfüllen 310 der Granulatstücke 10 wird manuell oder automatisiert durchgeführt, wobei die Granulatstücke 10 durch den Einfluss der Schwerkraft in den unteren Bereich 24 der Zuführeinrichtung 2 rutschen.

Das Erzeugen 320 von Luftimpulsen 26 wird in Intervallen durchgeführt und die Granulatstücke 10 werden dadurch derart im Bereich der Luftimpulse 26 aufgeschleudert, dass diese beim wieder Herabfallen einen Impuls auf die darunterliegenden Granulatstücke 10 ausüben und diese zum Nachrutschen in den beheizten Hohlraum 40 des Druckkopfes 100 anregen.

## Patentansprüche

1. Druckkopf (100) für einen 3D-Drucker, umfassend
eine in einem Gehäuse (1) des Druckkopfes (100) angeordnete Aktorvorrichtung (110) zur Ansteuerung eines Kolbens (3), eine Zuführeinrichtung (2) für ein druckbares Material (10), ein am Gehäuse (1) und der Zuführeinrichtung (2) angeordneten Flansch (5) mit einer Kühlvorrichtung (50), ein Düsenkopf (6) mit Heizelementen (61, 63) zur Umwandlung des Materials (10) von einer festen Phase (10) in eine flüssige Phase (12) und eine Düse (8) zur Ausbringung der flüssigen Phase (12) des Materials (10) aus dem Düsenkopf (6),
wobei die feste Phase (10) des Materials Granulatstücke (10) umfasst,
**dadurch gekennzeichnet, dass**, die Zuführeinrichtung (2) eine Einblasvorrichtung (25) zum Lösen der Granulatstücke (10) voneinander aufweist.

2. Druckkopf (100) nach Anspruch 1,
**dadurch gekennzeichnet, dass** die Einblasvorrichtung (25) ein pneumatisches Ventil (22) und einen Luftkanal (20) umfasst.

3. Druckkopf (100) nach Anspruch 2,
**dadurch gekennzeichnet, dass** der Luftkanal (20) in einem Gehäuseteil (27) der Zuführeinrichtung (2) angeordnet ist und in einem unteren Bereich (24) der Zuführeinrichtung (2) oberhalb eines Öffnungsquerschnitts (21) des Flansches (5) mündet.

4. Druckkopf (100) nach Anspruch 3,
**dadurch gekennzeichnet, dass** der Luftkanal (20) durch das pneumatisches Ventil (22) mit Luftimpulsen (26) beaufschlagbar ist, wobei die Luftimpulse (26) derart im unteren Bereich (24) auf die Granulatstücke (10) wirken, dass sich diese voneinander lösen.

5. Verfahren (210) zum Befüllen eines Druckkopfes (100) nach einem der Ansprüche 1 bis 4,
wobei ein beheizbarer Hohlraum (40) des Druckkopfes (100) mit druckbarem Material (10) durch die Zuführeinrichtung (2) befüllt wird.

6. Verfahren (210) nach Anspruch 5,
**dadurch gekennzeichnet, dass** das Befüllen (210) des Hohlraums (40) mit druckbarem Material (10) durch die Zuführeinrichtung (2) zumindest folgende Schritte umfasst:
- Einfüllen (310) der Granulatstücke (10) über eine Öffnung (23) der Zuführeinrichtung (2) in den Druckkopf (100) und
- Erzeugen (320) von Luftimpulsen (26) zum Lösen der Granulatstücke (10) voneinander.

7. Verfahren (210) nach Anspruch 6,
**dadurch gekennzeichnet, dass** das Einfüllen (310) der Granulatstücke (10) manuell oder automatisiert durchgeführt wird, wobei die Granulatstücke (10) durch den Einfluss der Schwerkraft in den unteren Bereich (24) der Zuführeinrichtung (2) rutschen.

8. Verfahren (210) nach Anspruch 7,
**dadurch gekennzeichnet, dass** das Erzeugen (320) von Luftimpulsen (26) in Intervallen durchgeführt wird und die Granulatstücke (10) derart im Bereich der Luftimpulse (26) aufgeschleudert werden, dass diese beim Herabfallen einen Impuls auf die darunterliegenden Granulatstücke (10) ausüben und diese zum Nachrutschen in den beheizten Hohlraum (40) des Druckkopfes (100) anregen.

## Claims

1. Printhead (100) for a 3D printer, comprising
an actuating device (110) which is arranged in a housing (1) of the printhead (100) and is intended for activating a piston (3), a feeder (2) for a printable material (10), a flange (5) which is arranged on the housing (1) and the feeder (2) and has a cooling device (50), a nozzle head (6) which has heating elements (61, 63) for making the material (10) transition from a solid phase (10) to a liquid phase (12), and a nozzle (8) for dispensing the liquid phase (12) of the material (10) from the nozzle head (6),
wherein the solid phase (10) of the material comprises granules (10),
**characterized in that** the feeder (2) has a blowing device (25) for dislodging the granules (10) from one another.

2. Printhead (100) according to Claim 1,
**characterized in that** the blowing device (25) has a pneumatic valve (22) and an air channel (20).

3. Printhead (100) according to Claim 2,
**characterized in that** the air channel (20) is arranged in a housing part (27) of the feeder (2) and emerges in a lower region (24) of the feeder (2) above an opening cross section (21) of the flange (5).

4. Printhead (100) according to Claim 3,
**characterized in that** air pulses (26) can be applied to the air channel (20) by the pneumatic valve (22), wherein the air pulses (26) act on the granules (10) in the lower region (24) such that the granules are dislodged from one another.

5. Method (210) for filling a printhead (100) according to one of Claims 1 to 4, wherein a heatable cavity (40) of the printhead (100) is filled with printable mate-
rial (10) by the feeder (2).

6. Method (210) according to Claim 5,
**characterized in that** the filling (210) of the cavity (40) with printable material (10) by the feeder (2) comprises at least the following steps:
- pouring (310) the granules (10) into the printhead (100) via an opening (23) in the feeder (2), and
- generating (320) air pulses (26) to dislodge the granules (10) from one another.

7. Method (210) according to Claim 6,
**characterized in that** the pouring (310) of the granules (10) is carried out manually or in automated fashion, the granules (10) slipping into the lower region (24) of the feeder (2) under the influence of gravitational force.

8. Method (210) according to Claim 7,
**characterized in that** the generating (320) of air pulses (26) is carried out at intervals and the granules (10) are thrown up in the region of the air pulses (26) such that, as they fall down, they impact the granules (10) underneath them and excite them to slide down into the heated cavity (40) of the printhead (100).

## Revendications

1. Tête d'impression (100) pour une imprimante 3D, comprenant
un dispositif actionneur (110), agencé dans un boîtier (1) de la tête d'impression (100) pour commander un piston (3), un dispositif d'alimentation (2) pour un matériau imprimable (10), une bride (5), agencée sur le boîtier (1) et le dispositif d'alimentation (2) avec un dispositif de refroidissement (50), une tête de buse (6), avec des éléments chauffants (61, 63) pour transformer le matériau (10) d'une phase solide (10) en une phase liquide (12) et une buse (8), pour faire sortir la phase liquide (12) du matériau (10) de la tête de buse (6),
la phase solide (10) du matériau comprenant des granulés (10),
**caractérisée en ce que** le dispositif d'alimentation (2) comporte un dispositif de soufflage (25) pour séparer les granulés (10) les uns des autres.

2. Tête d'impression (100) selon la revendication 1,
**caractérisée en ce que** le dispositif de soufflage (25) comprend une vanne pneumatique (22) et un conduit d'air (20).

3. Tête d'impression (100) selon la revendication 2,
**caractérisée en ce que** le conduit d'air (20) est agencé dans une partie de boîtier (27) du dispositif d'alimentation (2) et débouche dans une zone inférieure (24) du dispositif d'alimentation (2) au-dessus d'une section d'ouverture (21) de la bride (5).

4. Tête d'impression (100) selon la revendication 3,
**caractérisée en ce que** le conduit d'air (20) est apte à être alimenté en impulsions d'air (26) par la vanne pneumatique (22), les impulsions d'air (26) agissant sur les granulés (10) dans la zone inférieure (24) de telle sorte que ceux-ci se détachent les uns des autres.

5. Procédé (210) de remplissage d'une tête d'impression (100) selon l'une des revendications 1 à 4,
dans lequel une cavité chauffante (40) de la tête d'impression (100) est remplie de matériau imprimable (10) par le dispositif d'alimentation (2).

6. Procédé (210) selon la revendication 5,
**caractérisé en ce que** le remplissage (210) de la cavité (40) avec un matériau imprimable (10) par le dispositif d'alimentation (2) comprend au moins les étapes suivantes :
- remplissage (310) de la tête d'impression (100) avec les granulés (10) par une ouverture (23) du dispositif d'alimentation (2), et
- génération (320) d'impulsions d'air (26) pour séparer les granulés (10) les uns des autres.

7. Procédé (210) selon la revendication 6,
**caractérisé en ce que** le remplissage (310) des granulés (10) est effectué manuellement ou automatiquement, les granulés (10) glissant dans la partie inférieure (24) du dispositif d'alimentation (2) sous l'effet de la gravité.

8. Procédé (210) selon la revendication 7,
**caractérisé en ce que** la génération (320) d'impulsions d'air (26) est effectuée à intervalles et les morceaux de granulés (10) sont projetés dans la zone des impulsions d'air (26) de telle sorte que, lorsqu'ils tombent, ils exercent une impulsion sur les granulés (10) situés en dessous et les incitent à glisser dans la cavité chauffée (40) de la tête d'impression (100).
